# EUROPEAN PATENT APPLICATION

(11) **EP 2 173 000 A1**
(43) Date of publication of application: **07.04.2010**
(21) Application number: 08765368.9
(22) Date of filing: 10.06.2008
(51) Int. Cl.: H01M 8/04, C01B 3/36, C01B 3/38, H01M 8/06, H01M 8/12

(54) **FUEL BATTERY SYSTEM AND ITS ACTIVATING METHOD**

(30) Priority: 13.06.2007 JP 2007156438
(71) Applicant: Nippon Oil Corporation, Tokyo 105-8412 (JP)
(72) Inventor: HATADA, Susumu, Yokohama-shi Kanagawa 231-0815 (JP)
(74) Representative: Cabinet Plasseraud
(86) International application number: PCT/JP2008/060578
(87) International publication number: WO 2008/153011

(57) **Abstract**

In a method for starting up a fuel cell system, reforming is reliably performed from an early stage to more reliably prevent the oxidative degradation of the anode. A method for starting up a fuel cell system including a reformer having a reforming catalyst layer, for reforming a hydrocarbon-based fuel to produce a hydrogen-containing gas, and a high temperature fuel cell for generating electric power using the gas, wherein a) a temperature condition of the catalyst layer under which the fuel at a flow rate lower than a fuel flow rate at the completion of start-up can be reformed, and a temperature condition of the catalyst layer under which the fuel at the flow rate at the completion of start-up can be reformed are previously found, b) the temperature of the catalyst layer is increased, while the temperature of the catalyst layer is measured, c) the measured temperature of the catalyst layer is compared with at least one of the temperature conditions to determine the flow rate of the fuel that can be reformed at a point of time when the measurement is performed, d) the fuel at the determined flow rate is supplied to the catalyst layer and reformed, and the reformed gas is supplied to the anode of the fuel cell, when the determined flow rate exceeds the present value of the fuel flow rate, and the steps c and d are repeated until the feed rate of the fuel to the catalyst layer becomes the flow rate at the completion of start-up. Also provided is a fuel cell system appropriate for this method.

## Description

### Technical Field

The present invention relates to a fuel cell system that generates electric power using a reformed gas obtained by reforming a hydrocarbon-based fuel, such as kerosene, and a method for starting up the same.

### Background Art

A solid oxide fuel cell (hereinafter sometimes referred to as SOFC) system usually includes a reformer for reforming a hydrocarbon-based fuel, such as kerosene and town gas, to generate a hydrogen-containing gas (reformed gas), and an SOFC for electrochemically reacting the reformed gas and air for electric power generation.

The SOFC is usually operated at a high temperature of 550 to 1000°C.

Various reactions, such as steam reforming (SR), partial oxidation reforming (POX), and autothermal reforming (ATR), are used for reforming, and heating to a temperature at which catalytic activity is exhibited is necessary for using a reforming catalyst.

In this manner, the temperature of both the reformer and the SOFC should be increased at start-up. Patent Document 1 describes a method for starting up an SOFC system, in which the SOFC system that performs steam reforming can be efficiently performed in a short time.

Steam reforming is a very large endothermic reaction. Also, the reaction temperature of the steam reforming is 550 to 750°C, which is relatively high, and the steam reforming requires a high temperature heat source. Therefore, an internal reforming SOFC is known in which a reformer (internal reformer) is installed near an SOFC, and the reformer is heated mainly using radiant heat from the SOFC as a heat source (Patent Document 2).
Patent Document 1: Japanese Patent Laid-Open No. 2006-190605
Patent Document 2: Japanese Patent Laid-Open No. 2004-319420

### Disclosure of the Invention

### Problems to be Solved by the Invention

Generally, when the temperature of an SOFC is increased to its operating temperature at the start-up of an SOFC system, a reducing gas, such as hydrogen, is beforehand made to flow through the anode to prevent the oxidative degradation of the anode of the cell.

As a hydrogen supply source during the increase of temperature, various ones, such as a hydrogen gas bomb, hydrogen-storing, -adsorbing and -generating materials, and electrolytic hydrogen, are considered. But, considering wide-spreading of the system for consumer use, the supply source is desirably a reformed gas obtained from a fuel.

When a fuel is reformed by a reformer at start-up, and the obtained reformed gas is supplied to an SOFC to prevent the degradation of the anode, for example, in the case of an indirect internal reforming SOFC, the SOFC is also simultaneously heated by heat transfer from the internal reformer. As a result, the anode is increased to the oxidative degradation temperature or higher, and when the anode is in an atmosphere of an oxidizing gas, for example, air or steam, the anode may be oxidatively degraded. Therefore, it is desired to produce the reformed gas from a stage as early as possible.

On the other hand, when a hydrocarbon-based fuel is not reformed to a predetermined composition, and an unreformed component is supplied to the SOFC, flow blockage due to carbon deposition and anode degradation may occur, particularly when heavy hydrocarbon, such as kerosene, is used as the hydrocarbon-based fuel. Therefore, even at start-up, a method for reliably performing reforming is necessary.

While it is desired to produce the reformed gas from a stage as early as possible at start-up as mentioned above, it is desired to reliably perform reforming. This is true not only for the SOFC, but also for a fuel cell system having a high temperature fuel cell, such as a molten carbonate fuel cell (MCFC).

It is an object of the present invention to provide a method for starting up a fuel cell system including a reformer having a reforming catalyst layer and a high temperature fuel cell, in which reforming can be reliably performed from an early stage to more reliably prevent the oxidative degradation of the anode.

It is another object of the present invention to provide a fuel cell system preferred for performing such a method.

### Means for Solving the Problems

The present invention provides a method for starting up a fuel cell system comprising a reformer having a reforming catalyst layer, for reforming a hydrocarbon-based fuel to produce a hydrogen-containing gas, and a high temperature fuel cell for generating electric power using the hydrogen-containing gas, including:
a) previously finding a first temperature condition that is a temperature condition of the reforming catalyst layer under which the hydrocarbon-based fuel at a flow rate lower than a hydrocarbon-based fuel flow rate at completion of start-up can be reformed, and
   a second temperature condition that is a temperature condition of the reforming catalyst layer under which the hydrocarbon-based fuel at the flow rate at the completion of start-up can be reformed;
b) increasing a temperature of the reforming catalyst layer, while measuring the temperature of the reforming catalyst layer;
c) comparing the measured temperature of the reforming catalyst layer with at least one of the first and second temperature conditions to determine a flow rate of the hydrocarbon-based fuel that can be reformed in the reforming catalyst layer at a point of time when the measurement is performed; and
d) when thus determined flow rate exceeds the present value of a hydrocarbon-based fuel flow rate, supplying the hydrocarbon-based fuel at the determined flow rate to the reforming catalyst layer, reforming the hydrocarbon-based fuel, and supplying the obtained reformed gas to the anode of the high temperature fuel cell,
wherein steps c and d are repeated until the feed rate of the hydrocarbon-based fuel supplied to the reforming catalyst layer becomes the flow rate at the completion of start-up.

The above method preferably further includes
e) supplying steam and/or an oxygen-containing gas at a flow rate required for the reforming performed in step d to the reforming catalyst layer prior to step d.

It is preferred to use, as the reforming catalyst layer, a reforming catalyst layer that can promote a steam reforming reaction is preferably used, and
to perform steam reforming when the hydrocarbon-based fuel at the flow rate at the completion of start-up is reformed.

It is preferred to use, as the reforming catalyst layer, a reforming catalyst layer that can promote a steam reforming reaction and a partial oxidation reforming reaction, and
to perform partial oxidation reforming or autothermal reforming when the hydrocarbon-based fuel at a flow rate lower than the flow rate at the completion of start-up is reformed.

It is possible to use, as the reforming catalyst layer, a reforming catalyst layer that can promote combustion, and
to supply, in step b, the hydrocarbon-based fuel to the reforming catalyst layer to perform combustion.

In the above method,
temperature sensors may be disposed at the inlet end and outlet end of the reforming catalyst layer and between the inlet end and the outlet end, provided that the temperature sensors are disposed at different positions along a gas flow direction, and
when the number of the temperature sensors is represented as N+1, N being an integer of 2 or more,
the i-th temperature sensor from the inlet end side of the reforming catalyst layer is represented as Sᵢ, i being an integer of 1 or more and N or less, and the temperature sensor provided at the outlet end of the reforming catalyst layer is represented as S_{N+1},
a region of the reforming catalyst layer positioned between the temperature sensor S₁ and the temperature sensor Sᵢ₊₁ is represented as Zᵢ, and
different N hydrocarbon-based fuel flow rates are represented as Fkᵢ, provided that Fk₁ has a positive value, Fkᵢ increases with an increase of i, and Fk_{N} is the hydrocarbon-based fuel flow rate at the completion of start-up,
in step a, temperatures T₁ (Fkᵢ) and Tᵢ₊₁ (Fkᵢ) respectively measured by the temperature sensors S₁ and Sᵢ₊₁ may be found as a temperature condition under which the hydrocarbon-based fuel at each flow rate Fkᵢ can be reformed in the region Zᵢ, and the T₁ (Fkᵢ) and Tᵢ₊₁ (Fkᵢ) may be considered as a temperature condition of the reforming catalyst layer under which the hydrocarbon-based fuel at the flow rate Fkᵢ can be reformed,
steps c and d may be repeatedly performed N times, and
in an i-th step c, when temperatures t₁ and tᵢ₊₁ respectively measured by the temperature sensors S₁ and Sᵢ₊₁ become respectively the temperatures T₁ (Fkᵢ) and Tᵢ₊₁ (Fkᵢ) or higher, the flow rate of the hydrocarbon fuel that can be reformed in the region Zᵢ may be determined as Fkᵢ.

Alternatively, in the above method,
temperature sensors may be disposed at the inlet end and outlet end of the reforming catalyst layer and between the inlet end and the outlet end, provided that the temperature sensors are disposed at different positions along a gas flow direction, and
when the number of the temperature sensors is represented as N+1, N being an integer of 2 or more,
the i-th temperature sensor from the inlet end side of the reforming catalyst layer is represented as Sᵢ, i being an integer of 1 or more and N or less, and the temperature sensor provided at the outlet end of the reforming catalyst layer is represented as S_{N+1}, and
different N hydrocarbon-based fuel flow rates are represented as Fkᵢ, provided that Fk₁ has a positive value, Fkᵢ increases with an increase of i, and Fk_{N} is the hydrocarbon-based fuel flow rate at the completion of start-up,
in step a, at least one temperature of temperatures T₁ (Fkᵢ) to T_{N+1} (Fkᵢ) respectively measured by the temperature sensors S₁ to S_{N+1} may be found as a temperature condition under which the hydrocarbon-based fuel at each flow rate Fkᵢ can be reformed in the entire reforming catalyst layer, and the at least one temperature of T₁ (Fkᵢ) to T_{N+1} (Fkᵢ) may be considered as a temperature condition of the reforming catalyst layer under which the hydrocarbon-based fuel at the flow rate Fkᵢ can be reformed,
steps c and d may be repeatedly performed N times, and
in an i-th step c, when a temperature measured by the temperature sensor S₁ to S_{N+1} that measure the at least one temperature of T₁ (Fkᵢ) to T_{N+1} (Fkᵢ) in step a becomes equal to or higher than the at least one temperature of T₁ (Fkᵢ) to T_{N+1} (Fkᵢ) measured by the same temperature sensor, the flow rate of the hydrocarbon fuel that can be reformed may be determined as Fkᵢ.

The present invention provides a fuel cell system including:
a reformer having a reforming catalyst layer, for reforming a hydrocarbon-based fuel to produce a hydrogen-containing gas;
a high temperature fuel cell for generating electric power using the hydrogen-containing gas;
a reforming catalyst layer temperature measuring means for measuring a temperature of the reforming catalyst layer;
a reforming catalyst layer temperature increasing means for increasing a temperature of the reforming catalyst layer; and
a flow rate controlling means for controlling the feed rates of a reforming aid gas and the hydrocarbon-based fuel to the reforming catalyst layer, the reforming aid gas being at least one selected from the group consisting of steam and an oxygen-containing gas,
wherein a first temperature condition that is a temperature condition of the reforming catalyst layer under which the hydrocarbon-based fuel at a flow rate lower than a hydrocarbon-based fuel flow rate at completion of start-up can be reformed, a second temperature condition that is a temperature condition of the reforming catalyst layer under which the hydrocarbon-based fuel at the flow rate at the completion of start-up can be reformed, and the feed rate of the hydrocarbon-based fuel to the reforming catalyst layer at the completion of start-up are able to be input into the flow rate controlling means,
the flow rate controlling means is able to repeatedly operate the following fuel flow rate determining function and fuel flow rate setting function in this order until the feed rate of the hydrocarbon-based fuel to the reforming catalyst layer becomes the flow rate at the completion of start-up,
the fuel flow rate determining function is a function of comparing the measured temperature of the reforming catalyst layer with at least one of the first and second temperature conditions to determine the flow rate of the hydrocarbon-based fuel that can be reformed in the reforming catalyst layer at a point of time when the measurement is performed, and
the fuel flow rate setting function is a function of setting the flow rate of the hydrocarbon-based fuel supplied to the reforming catalyst layer to the determined flow rate when the determined flow rate exceeds the present value of the flow rate of the hydrocarbon-based fuel supplied to the reforming catalyst layer.

In the above fuel cell system,
the flow rate controlling means preferably has a function of calculating a reforming aid gas flow rate required for reforming the hydrocarbon-based fuel at a flow rate set by the fuel flow rate setting function, and setting the flow rate of the reforming aid gas supplied to the reforming catalyst layer to the calculated flow rate before setting a flow rate in the fuel flow rate setting function.

In the above fuel cell system, it is preferred that
the reforming catalyst layer can promote a steam reforming reaction,
the reforming aid gas includes steam, and
the flow rate controlling means can control the feed rate of the reforming aid gas to the reforming catalyst layer so as to perform steam reforming when reforming the hydrocarbon-based fuel at the flow rate at the completion of start-up.

In the above fuel cell system, it is preferred that
the reforming catalyst layer can promote a steam reforming reaction and a partial oxidation reforming reaction,
the reforming aid gas includes at least an oxygen-containing gas, and
the flow rate controlling means can control the feed rate of the reforming aid gas to the reforming catalyst layer so as to perform partial oxidation reforming or autothermal reforming when reforming the hydrocarbon-based fuel at a flow rate lower than the flow rate at the completion of start-up.

In the above fuel cell system,
the reforming catalyst layer may promote combustion,
the reforming aid gas may include at least an oxygen-containing gas,
the flow rate controlling means may be able to control the feed rates of the reforming aid gas and the hydrocarbon-based fuel to the reforming catalyst layer so as to perform combustion, and
the reforming catalyst layer and the flow rate controlling means may constitute the reforming catalyst layer temperature increasing means.

### Advantages of the Invention

The present invention provides a method for starting up a fuel cell system including a reformer having a reforming catalyst layer, and a high temperature fuel cell, in which reforming can be reliably performed from an early stage to more reliably prevent the oxidative degradation of the anode.

The present invention provides a fuel cell system preferred for performing such a method.

### Brief Description of the Drawings

Figure 1 is a schematic diagram showing the outline of an embodiment of an indirect internal reforming SOFC system; and
Figure 2 is a schematic diagram showing the outline of another embodiment of the indirect internal reforming SOFC system.

### Description of Symbols

- 1: water vaporizer
- 2: electrical heater annexed to water vaporizer
- 3: reformer
- 4: reforming catalyst layer
- 5: thermocouple
- 6: SOFC
- 7: igniter
- 8: module container
- 9: electrical heater annexed to reformer
- 10: computer
- 11: flow rate control valve
- 12: flowmeter

### Best Mode for Carrying Out the Invention

A fuel cell system used in the present invention includes a reformer for reforming a hydrocarbon-based fuel to produce a hydrogen-containing gas, and a high temperature fuel cell. The reformer has a reforming catalyst layer. The high temperature fuel cell generates electric power, using the hydrogen-containing gas obtained from the reformer. The reforming catalyst layer is composed of a reforming catalyst that can promote a reforming reaction. The hydrogen-containing gas obtained from the reformer is referred to as a reformed gas.

### [Step a]

In the present invention, step a is previously performed before the fuel cell system is actually started up.

In the step a, a temperature condition of the reforming catalyst layer under which a hydrocarbon-based fuel at a flow rate lower than a hydrocarbon-based fuel flow rate at the completion of start-up can be reformed in the reforming catalyst layer (first temperature condition) is previously found. Also, in the step a, a temperature condition of the reforming catalyst layer under which the hydrocarbon-based fuel at the flow rate at the completion of start-up can be reformed in the reforming catalyst layer (second temperature condition) is previously found.

The flow rate of the hydrocarbon-based fuel at the completion of start-up is previously appropriately set in view of the conditions of subsequent normal operation (rated operation and partial load operation).

These temperature conditions can be found by preliminary experiment or simulation.

### [Step b]

When the fuel cell system is actually started up, step b is performed. In other words, the temperature of the reforming catalyst layer is increased, while the temperature of the reforming catalyst layer is measured. The temperature measurement and the temperature increase in the step b are continued until the completion of start-up.

For example, an electrical heater provided in the reformer may be used as a heat source for this temperature increase.

Also, the temperature of the reforming catalyst layer may be increased by letting a high temperature fluid flow through the reforming catalyst layer. For example, steam and/or air required for reforming may be preheated as required and supplied. An electrical heater or a combustor, such as a burner, may be used as a heat source for this preheating. Alternatively, when a high temperature fluid is supplied from outside the fuel cell system, the fluid may be a heat source for the above-described preheating.

Alternatively, when the reforming catalyst layer can promote combustion, the temperature of the reforming catalyst layer may be increased by combusting the hydrocarbon-based fuel in the reforming catalyst layer. The combustion gas is an oxidizing gas. Therefore, in terms of preventing the fuel cell from being degraded by the combustion gas flowing through the fuel cell, combustion is performed in the reforming catalyst layer when the fuel cell is at a temperature at which the fuel cell is not degraded even if the combustion gas flows through the fuel cell. Therefore, the temperature of the fuel cell, particularly the temperature of the anode electrode, is monitored, and when the temperature becomes a temperature at which degradation may occur, the above combustion may be stopped.

Further, after the reformed gas is produced, the temperature of the reforming catalyst layer may be increased using combustion heat generated by combusting the reformed gas.

Also, when heat is generated by reforming, after the reforming is started, the temperature of the reforming catalyst layer may be increased by the heat generation. When partial oxidation reforming is performed, or when heat generation by a partial oxidation reforming reaction is larger than heat absorption by a steam reforming reaction in autothermal reforming, heat is generated by the reforming.

Also, the above-described temperature increasing methods may be appropriately used in combination, or may be separately used depending on the situation.

### [Steps c and d]

After the increase of the temperature of the reforming catalyst layer is started, or from a point of time when the increase of the temperature of the reforming catalyst layer is started, steps c and d are repeatedly performed. In other words, steps c and d are performed at least twice. This repetition is performed until the feed rate of the hydrocarbon-based fuel to the reforming catalyst layer reaches the flow rate at the completion of start-up.

In the step c, the measured temperature of the reforming catalyst layer is compared with at least one of the first and second temperature conditions found in the step a. Then, the flow rate of the hydrocarbon-based fuel that can be reformed in the reforming catalyst layer at a point of time when this temperature measurement is performed is determined. In the step d, when the flow rate determined in the step c exceeds the present value of the hydrocarbon-based fuel flow rate, the hydrocarbon-based fuel at the determined flow rate is supplied to the reforming catalyst layer and reformed. In other words, in the step d, the flow rate of the hydrocarbon-based fuel supplied to the reforming catalyst layer is increased (including a case where the flow rate is increased from zero).

In this manner, the temperature condition of the reforming catalyst layer under which the hydrocarbon-based fuel at the flow rate at the completion of start-up can be reformed (second temperature condition), and the temperature condition of the reforming catalyst layer under which the hydrocarbon-based fuel at a small flow rate (a flow rate lower than the hydrocarbon-based fuel flow rate at the completion of start-up) can be reformed (first temperature condition) are previously found in the present invention. These temperature conditions do not mean temperature conditions under which the amount of the hydrocarbon-based fuel that can be reformed in the reforming catalyst layer is exactly the flow rate at the completion of start-up or the above-described small flow rate. It is enough to know that when the temperature of the reforming catalyst layer becomes equal to or higher than the first temperature condition, the hydrocarbon-based fuel at the above-described small flow rate can be reformed to a predetermined composition, and that when the temperature of the reforming catalyst layer becomes equal to or higher than the second temperature condition, the hydrocarbon fuel at the flow rate at the completion of start-up can be reformed to a predetermined composition.

Here, the predetermined composition means a composition appropriately set beforehand as the composition of the reformed gas suitably supplied to the stack.

Also, it is not always necessary to determine whether the reforming can be performed by the entire reforming catalyst layer. In other words, it is also possible to determine whether the reforming can be performed by a part of the reforming catalyst layer or not.

Lower temperature is enough to reform the hydrocarbon-based fuel at a lower flow rate. Therefore, the first temperature condition is set to a level lower than that of the second temperature condition. When the temperature of the reforming catalyst layer becomes equal to or higher than the first temperature condition, the hydrocarbon-based fuel at the above-described small flow rate is supplied to the reforming catalyst layer and reformed. When the temperature of the reforming catalyst layer becomes equal to or higher than the second temperature condition, the hydrocarbon-based fuel at the flow rate at the completion of start-up is supplied to the reforming catalyst layer and reformed.

In this manner, the hydrocarbon-based fuel supplied to the reforming catalyst layer is increased stepwise in the present invention. In other words, the fuel cell system can be started up, while reforming is performed, divided into a total of two stages, the stage of reforming the hydrocarbon-based fuel at the above-described small flow rate and the stage of reforming the hydrocarbon-based fuel at the flow rate at the completion of start-up. Thus, the hydrocarbon-based fuel at a lower flow rate can be reformed to a predetermined composition from a point of time when the increase of the temperature of the reforming catalyst layer does not proceed much, and the reformed gas can be obtained earlier.

The stage of reforming the hydrocarbon-based fuel at the above-described small flow rate may be performed, further divided into two or more stages. In this case, in the step a, two or more first temperature conditions of the reforming catalyst layer under which the hydrocarbon-based fuel at two or more different flow rates lower than the hydrocarbon-based fuel flow rate at the completion of start-up can be reformed respectively are previously found. At least one of these two or more first temperature conditions and the second temperature condition may be compared with the measured temperature of the reforming catalyst layer to determine the flow rate of the hydrocarbon-based fuel that can be reformed at this point of time. In other words, reforming may be performed at three or more stages until the completion of start-up.

As a temperature condition, a temperature at one point in the reforming catalyst layer may be used, or, temperatures at a plurality of points in the reforming catalyst layer at different positions along the gas flow direction may be used. Alternatively, a representative temperature, such as an average value, may be calculated from the temperatures at the plurality of points and used.

The position(s) where temperature used for the determination is measured, and the number of the positions may be decided, using preliminary experiment or simulation, according to the way of heating for increasing the temperature of the reforming catalyst layer.

Step e may be performed prior to the step d. In other words, steam and/or an oxygen-containing gas at a flow rate required for reforming the hydrocarbon-based fuel flowed (increased) in the step d may be supplied to the reforming catalyst layer, prior to step d. When repeating the steps c and d, after the feed rate of the hydrocarbon-based fuel to the reforming catalyst layer is increased in the step d, the step e may be immediately performed to beforehand supply to the reforming catalyst layer the steam and/or the oxygen-containing gas at a flow rate required for reforming the hydrocarbon-based fuel at a flow rate supplied in the next step d. Due to the step e, the hydrocarbon fuel supplied in the step d can be more reliably reformed. However, this is not limiting, and the steam and/or the oxygen-containing gas at the flow rate required in the step d may be supplied simultaneously with the step d.

When a steam reforming reaction is performed, that is, steam reforming or autothermal reforming is performed, steam is supplied to the reforming catalyst layer. When a partial oxidation reforming reaction is performed, that is, partial oxidation reforming or autothermal reforming is performed, an oxygen-containing gas is supplied to the reforming catalyst layer. As the oxygen-containing gas, a gas containing oxygen may be appropriately used, but in terms of the ease of availability, air is preferred.

In the present invention, reforming is performed stepwise, but it is not always necessary to perform the same type of reforming at each stage. For example, a total of two stages are possible in which autothermal reforming is performed at the first stage, and steam reforming is performed at the second stage. Or, a total of three stages are possible in which partial oxidation reforming is performed at the first stage, autothermal reforming is performed at the second stage, and steam reforming is performed at the third stage. Alternatively, it is also possible to perform steam reforming at all stages, to perform autothermal reforming at all stages, or to perform partial oxidation reforming at all stages. Temperature conditions under which reforming is possible are previously found in the step a, corresponding to the number of stages of reforming and the type of reforming.

In reforming the hydrocarbon-based fuel at the flow rate at the completion of start-up, that is, at the final stage of reforming performed stepwise in the start-up of the fuel cell system, in other words, in the step d finally performed, steam reforming is preferably performed. In other words, preferably, only a steam reforming reaction is allowed to proceed, and a partial oxidation reforming reaction is not allowed to proceed because the hydrogen concentration in the reformed gas can be relatively high, prior to normal operation which is performed after the completion of start-up. In this case, a reforming catalyst layer that can promote a steam reforming reaction is used.

In reforming hydrocarbon at the above-described small flow rate, partial oxidation reforming or autothermal reforming is preferably performed. Particularly, when there are a plurality of stages of reforming hydrocarbon at the small flow rate, partial oxidation reforming or autothermal reforming is preferably performed at the first stage, or a part of stages following the first stage, of the plurality of stages because performing reforming which involves a partial oxidation reforming reaction can hasten the temperature increase. In this case, a reforming catalyst layer that can promote a steam reforming reaction and a partial oxidation reforming reaction is preferably used because a steam reforming reaction can be performed at the final stage of reforming, and the hydrogen concentration can be made relatively high.

Further, combustion may be performed in the step b, using a reforming catalyst layer that can also promote combustion, in addition to a reforming reaction. In other words, the temperature of the reforming catalyst layer may be increased by combustion in the reforming catalyst layer. Also in this case, preferably, a temperature condition under which the hydrocarbon-based fuel at a certain flow rate can be combusted in the reforming catalyst layer is previously found, and when the temperature of the reforming catalyst layer is equal to or higher than this temperature condition, the hydrocarbon-based fuel at this flow rate is supplied to the reforming catalyst layer to perform combustion because combustion can be more reliably performed. The flow rate at this time may be lower than the flow rate of the hydrocarbon-based fuel at the completion of start-up.

More specific embodiments of the present invention will be described below, using drawings, but the present invention is not limited thereto.

### [Embodiment 1-1]

Here, autothermal reforming is performed at all stages of reforming at start-up. In this case, the reforming reaction is an overall exothermic reaction (heat generation by a partial oxidation reforming reaction is larger than heat absorption by a steam reforming reaction) to accelerate the increase of the temperature of the reforming catalyst layer and further an SOFC, using the reforming reaction heat.

Further, a temperature condition under which the hydrocarbon-based fuel can be reformed by a different part of the reforming catalyst layer at each stage (the entire reforming catalyst layer at the final stage) is previously found. A reforming catalyst layer that can promote a partial oxidation reforming reaction and a steam reforming reaction is used.

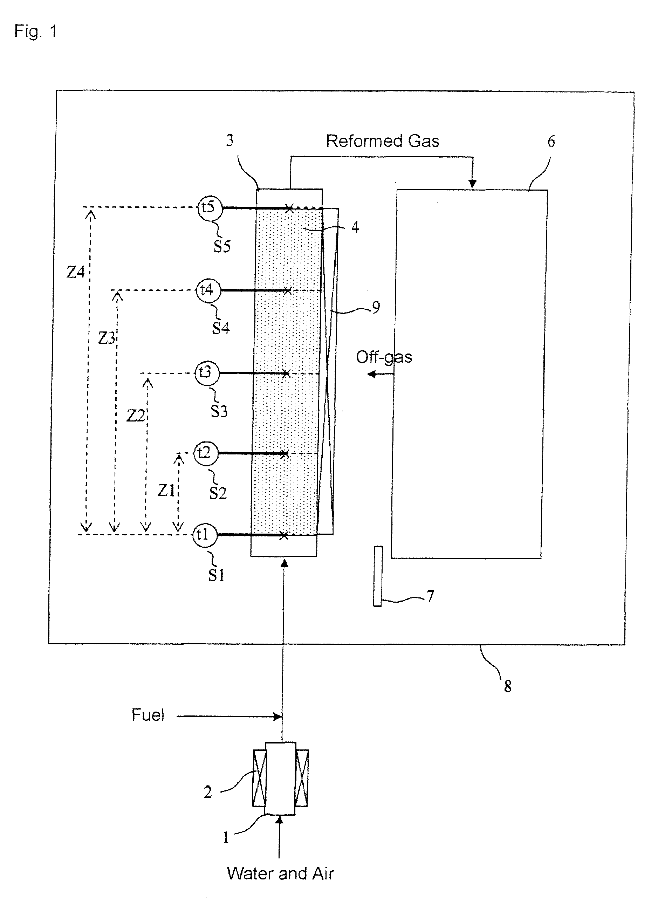

An SOFC system shown in Figure 1 includes an indirect internal reforming SOFC in which a reformer 3 and an SOFC 6 are housed in an enclosure (module container) 8. The reformer 3 is equipped with a reforming catalyst layer 4 and also an electrical heater 9.

Also, this SOFC system includes a water vaporizer 1 equipped with an electrical heater 2. The water vaporizer 1 generates steam by heating with the electrical heater 2. The steam may be supplied to the reforming catalyst layer after being appropriately superheated in the water vaporizer or downstream thereof.

Also, air is supplied to the reforming catalyst layer, and here, air can be supplied to the reforming catalyst layer after being preheated in the water vaporizer. Steam or a mixed gas of air and steam can be obtained from the water vaporizer.

The steam or the mixed gas of air and steam is mixed with a hydrocarbon-based fuel and supplied to the reformer 3, particularly to the reforming catalyst layer 4 of the reformer 3. When a liquid fuel, such as kerosene, is used as the hydrocarbon-based fuel, the hydrocarbon-based fuel may be supplied to the reforming catalyst layer after being appropriately vaporized.

A reformed gas obtained from the reformer is supplied to the SOFC 6, particularly to the anode of the SOFC 6. Although not shown, air is appropriately preheated and supplied to the cathode of the SOFC.

Combustible components in an anode off-gas (a gas discharged from the anode) are combusted by oxygen in a cathode off-gas (cathode off-gas) at the SOFC outlet. In order to do this, ignition using an igniter 7 is possible. The outlets of both the anode and the cathode open in the module container.

Temperature sensors are disposed at the inlet end and outlet end of the reforming catalyst layer and between the inlet end and the outlet end. These temperature sensors are disposed at different positions along the gas flow direction. The number of the temperature sensors is represented as N+1, wherein N is an integer of 2 or more, and the i-th temperature sensor from the inlet end side of the reforming catalyst layer is represented as Sᵢ, wherein i is an integer of 1 or more and N or less. The temperature sensor provided at the outlet end of the reforming catalyst layer is represented as S_{N+1}. Specifically, a thermocouple is used as the temperature sensor, a thermocouple S₁ is located at the inlet end of the reforming catalyst layer, a thermocouple S₂ is located at the position of 1/4 of the catalyst layer length from the inlet end of the catalyst layer, a thermocouple S₃ is located at the position of 2/4 of the catalyst layer length from the inlet end of the catalyst layer, a thermocouple S₄ is located at the position of 3/4 of the catalyst layer length from the inlet end of the catalyst layer, and a thermocouple S₅ is located at the outlet end of the catalyst layer.

The above N means the number of stages of reforming at the start-up of the fuel cell system.

The region of the reforming catalyst layer positioned between the temperature sensor S₁ and the temperature sensor Sᵢ₊₁ is represented as Zᵢ. Specifically, the region between S₁ and S₂ is Z₁, the region between S₁ and S₃ is Z₂, the region between S₁ and S₄ is Z₃, and the region between S₁ and S₅ is Z₄.

Since reforming is performed at four (=N) stages, four different hydrocarbon-based fuel flow rates are represented as Fkᵢ, provided that Fk₁ has a positive value, and Fkᵢ increases with the increase of i. In other words, 0<Fk₁<Fk₂<Fk₃<Fk₄. Fk_{N}, that is, Fk₄, is a hydrocarbon-based fuel flow rate at the completion of start-up.

Also, the flow rate of water used to generate steam that is supplied to the reforming catalyst layer when the hydrocarbon-based fuel at the flow rate Fkᵢ is reformed is represented as Fwᵢ. The flow rate of air that is supplied to the reforming catalyst layer when the hydrocarbon-based fuel at the flow rate Fkᵢ is reformed is represented as Faᵢ.

For the water flow rate, in order to suppress carbon deposition, preferably, the water flow rate is increased with the increase of the fuel flow rate, so that a predetermined value of S/C (the ratio of the number of moles of water molecules to the number of moles of carbon atoms in the gas supplied to the reforming catalyst layer) is maintained. For the air flow rate, desirably, the air flow rate is increased with the increase of the fuel flow rate, so that the reforming reaction is an overall exothermic reaction. Therefore, 0<Fw₁<Fw₂<Fw₃<Fw₄, and 0<Fa₁<Fa₂<Fa₃<Fa₄.

Before the SOFC system is actually started up, temperatures T₁ (Fkᵢ) and Tᵢ₊₁ (Fkᵢ) respectively measured by the temperature sensors S₁ and Sᵢ₊₁ are previously found as a temperature condition under which the hydrocarbon-based fuel at the flow rate Fkᵢ can be reformed in the region Zᵢ, and T₁ (Fkᵢ) and Tᵢ₊₁ (Fkᵢ) are considered as the temperature condition of the reforming catalyst layer under which the hydrocarbon-based fuel at the flow rate Fkᵢ can be reformed (the step a).

Specifically, temperatures T₁ (Fk₁) and T₂ (Fk₁) respectively measured by the temperature sensors S₁ and S₂ are found as a temperature condition under which the hydrocarbon-based fuel at the flow rate Fk₁ can be reformed in the region Z₁. T₁ (Fk₁) and T₂ (Fk₁) are considered as the temperature condition of the reforming catalyst layer under which the hydrocarbon-based fuel at the flow rate Fk₁ can be reformed.

Similarly, temperatures T₁ (Fk₂) and T₃ (Fk₂) respectively measured by the temperature sensors S₁ and S₃ are found as a temperature condition under which the hydrocarbon-based fuel at the flow rate Fk₂ can be reformed in the region Z₂. These temperatures T₁ (Fk₂) and T₃ (Fk₂) are considered as the temperature condition of the reforming catalyst layer under which the hydrocarbon-based fuel at the flow rate Fk₂ can be reformed.

Also, temperatures T₁ (Fk₃) and T₄ (Fk₃) respectively measured by the temperature sensors S₁ and S₄ are found as a temperature condition under which the hydrocarbon-based fuel at the flow rate Fk₃ can be reformed in the region Z₃. These temperatures T₁ (Fk₃) and T₄ (Fk₃) are considered as the temperature condition of the reforming catalyst layer under which the hydrocarbon-based fuel at the flow rate Fk₃ can be reformed.

Further, temperatures T₁ (Fk₄) and T₅ (Fk₄) respectively measured by the temperature sensors S₁ and S₅ are found as a temperature condition under which the hydrocarbon-based fuel at the flow rate Fk₄ can be reformed in the region Z₄ (the whole of the reforming catalyst layer). These temperatures T₁ (Fk₄) and T₅ (Fk₄) are considered as the temperature condition of the reforming catalyst layer under which the hydrocarbon-based fuel at the flow rate Fk₄ can be reformed.

This system can be actually started up by procedure shown below.

1. The temperature of the water vaporizer 1 is increased to a temperature at which water can vaporize, by the electrical heater 2 provided for the water vaporizer. At this time, nothing is supplied to the reforming catalyst layer 4.

2. The temperature of the reforming catalyst layer is increased by the electrical heater 9. The monitoring of temperature by the thermocouples S₁ to S₅ is also started.

3. Water at the flow rate F_{W1} is supplied to the water vaporizer 1 and vaporized, and the obtained steam is supplied to the reforming catalyst layer 4.

4. Air at the flow rate Fa₁ is supplied to the reforming catalyst layer 4.

The reforming catalyst layer is also heated by the sensible heat of the steam and air.

5. By determining whether temperatures t₁ and t₂ measured by the thermocouples S₁ and S₂ are respectively T₁ (Fk₁) and T₂ (Fk₁) or higher, it is determined that the flow rate of the hydrocarbon fuel that can be reformed in the region Z₁ is the flow rate Fk₁. In other words, when the condition that t₁ is T₁ (Fk₁) or higher and t₂ is T₂ (Fk₁) or higher is satisfied, it is determined that the flow rate of the hydrocarbon fuel that can be reformed in the region Z₁ is the flow rate Fk₁. When the above condition is not satisfied, the flow rate of the hydrocarbon fuel that can be reformed in the region Z₁ is zero.

6. When the flow rate of the hydrocarbon fuel that can be reformed is determined as Fk₁, since Fk₁ exceeds the present value (zero) of the hydrocarbon-based fuel flow rate, the hydrocarbon-based fuel is supplied at feed rate Fk₁ to the reforming catalyst layer and reformed, and the obtained reformed gas is supplied to the SOFC anode.

When the reformed gas is supplied to the SOFC anode, an anode off-gas (here, the reformed gas as it is) is discharged from the anode. Since the anode off-gas is combustible, the anode off-gas may be ignited using the igniter 7, and combusted. The reforming catalyst layer is also heated by this combustion heat. This is preferred for accelerating temperature increase.

After autothermal reforming is started in the reforming catalyst layer, the reforming catalyst layer is also heated by heat generation by the reforming reaction in the region Z₁, in addition to the heat generation of the electrical heater 9 and the sensible heat of the steam and preheated air. In the case of the indirect internal reforming SOFC system, when the anode off-gas is combusted, the reforming catalyst layer can also be heated using the combustion heat of the anode off-gas. In the cases of SOFC systems other than the indirect internal reforming SOFC system, for example, a combustion gas generated by combusting the anode off-gas by appropriate combustion means may be supplied to the periphery of the reformer to heat the reforming catalyst layer. These are preferred for accelerating temperature increase.

Then, the steps 3 to 6 are repeatedly performed a total of four times, while i is sequentially increased to 2, 3, and 4.

3 (the i-th time). Water at the flow rate Fwᵢ is supplied to the water vaporizer 1.

4 (the i-th time). Air at the flow rate Faᵢ is supplied to the reforming catalyst layer 4.

5 (the i-th time). By determining whether temperatures t₁ and tᵢ₊₁ (t₁ and t₃ in the case of i=2) measured by the thermocouples S₁ and Sᵢ₊₁ (S₃ in the case of i=2) are respectively T₁ (Fkᵢ) and Tᵢ₊₁ (Fkᵢ) (T₁ (Fk₂) and T₃ (Fk₂) in the case of i=2) or higher, it is determined that the flow rate of the hydrocarbon fuel that can be reformed in the region Zᵢ (Z₂ in the case of i=2) is the flow rate Fkᵢ (Fk₂ in the case of i=2).

6 (the i-th time). When the determined flow rate Fkᵢ exceeds a present value (Fkᵢ₋₁), a feed rate Fkᵢ of the hydrocarbon-based fuel is supplied to (the reforming catalyst layer and reformed, and the obtained reformed gas is supplied to the SOFC anode.

In this manner, the flow rate of the hydrocarbon-based fuel can be increased to the flow rate Fk₄ at the completion of start-up. When the temperature of the reformer and the SOFC is increased to a predetermined temperature, the start-up of the SOFC system can be completed.

The SOFC may be heated by the sensible heat of the reformed gas obtained from the reformer and also by the combustion heat of the anode off-gas. When the fuel cell has started electric power generation, the SOFC is also heated by heat generation by the cell reaction.

When air at a flow rate higher than an air flow rate at the time of rating is supplied at a point of time when the last step d (here, the fourth step d) is completed, the air flow rate can be decreased to the rated flow rate, while the reforming catalyst layer is maintained at a temperature at which the hydrocarbon-based fuel at a flow rate supplied after the last step d can be reformed. For example, in the last step d, air at a flow rate higher than the air flow rate at the time of rating may be supplied to make the reforming reaction an overall exothermic reaction, and at the time of rating, the air flow rate may be decreased (including becoming zero) to obtain a reformed gas having a higher hydrogen concentration, mainly using a steam reforming reaction. At the time of rating, the reforming reaction is an overall endothermic reaction, but the reformer can be heated by the combustion heat of the anode off-gas (also radiant heat from the SOFC, in addition to this, during electric power generation). Here, the flow rate of air supplied to the cathode, the hydrocarbon-based fuel flow rate, the water flow rate, and an electric current value when electric current is passed through the SOFC may be increased or decreased to maintain the reforming catalyst layer at the temperature at which the hydrocarbon-based fuel at the flow rate supplied after the last step d can be reformed.

By starting up the SOFC system in the above-described manner, first, a part of the catalyst layer on the upstream side can be heated, then, a reforming raw material at a lower flow rate at which reforming is possible in this region can be introduced, and a reducing reformed gas can be supplied to the SOFC. Therefore, it is easy to reduce the heat amount required for heating the catalyst layer, and it is easy to reduce the time until the generation of the reformed gas. It is effective that the reducing gas becomes available early, also for preventing the oxidative degradation of the anode.

Also, by installing a plurality of thermocouples in the catalyst layer along the hydrocarbon-based fuel flow direction, sequentially increasing the temperature of the catalyst layer regions, from the upstream side, to a temperature at which reforming is possible and increasing the hydrocarbon-based fuel flow rate stepwise, the unreformed component can be more reliably prevented from flowing into the SOFC.

This embodiment may be preferably used when the temperature of the catalyst layer increases from the inlet side.

In order to more reliably perform the prevention of the oxidative degradation of the anode, the temperature of the SOFC (for example, the highest temperature of the SOFC) may be monitored, and while this temperature is lower than the oxidative degradation temperature, the hydrocarbon-based fuel at a flow rate corresponding to reforming capacity at the point of time may be supplied. Specifically, a change in the temperature of the SOFC and the region Z₁ over time may be found by preliminary experiment or simulation, and the hydrocarbon fuel that can be reformed at the temperature of the region Z₁ at the point of time when the SOFC is at the oxidative degradation temperature or lower may be at Fk₁.

In the example described above, autothermal reforming is performed, and partial oxidation reforming reaction heat is used as heat for heating the reforming catalyst layer. Therefore, the size and the power supply capacity of the electrical heater can be made smaller, the size of the indirect internal reforming SOFC module can be made more compact, and its structure can be made simpler, compared with a case where the reforming catalyst layer is heated only by the heat generation of the electrical heater and a steam reforming reaction is performed.

In this embodiment, the electrical heater 9 is used to increase the temperature of the reforming catalyst layer, but when the catalyst layer is sufficiently heated by the sensible heat of the steam and air, the electrical heater 9 need not be used.

The start of the heating of the reforming catalyst layer by the electrical heater 9 is preferably performed from a point of time as early as possible to reduce time for the temperature increasing. The temperature of the reforming catalyst layer may be increased by the electrical heater 9 without waiting for the completion of the step of increasing the temperature of the water vaporizer to a temperature at which water can vaporize, by the electrical heater 2 (step 1). The electrical heater 2 for heating the water vaporizer and the electrical heater 9 for heating the reforming catalyst layer may be simultaneously operated.

In this embodiment, the heat generation of the electrical heater 2 is used for water vaporization, but this it not limiting. When steam at high temperature is supplied from outside the module, when air at high temperature is supplied from outside the module, and the water vaporizer is sufficiently heated by the sensible heat of air, or the like, the electrical heater 2 need not be used.

Here, the way of determining the feed rate of the hydrocarbon-based fuel, based on the previously found temperature conditions, will be described giving a specific example.

For example, the temperature condition of the reforming catalyst layer under which the hydrocarbon-based fuel at the flow rate Fkᵢ can be reformed in the region Zᵢ is previously found as shown in Table 1.

**Table 1**

| Region | Hydrocarbon-based fuel flow rate | Temperature condition |
|---|---|---|
| Z₁ | Fk₁ | T₁(Fk₁)=400°C and T₂(Fk₁)=500°C |
| Z₂ | Fk₂ | T₁(Fk₂)=400°C and T₃(Fk₂)=500°C |
| Z₃ | Fk₃ | T₁(Fk₃)=400°C and T₄(Fk₃)=500°C |
| Z₄ | Fk₄ | T₁(Fk₄)=400°C and T₅(Fk₄)=500°C |

In this case, in actually starting up the SOFC, when t₁ is 400°C or more and t₂ is 500°C or more, it can be determined that the hydrocarbon-based fuel flow rate Fk₁ is possible in the region Z₁ at this point of time, and therefore, the hydrocarbon-based fuel at the flow rate Fk₁ is supplied.

Next, when t₁ is 400°C or more and t₃ is 500°C or more, it can be determined that the hydrocarbon-based fuel flow rate Fk₂ is possible in the region Z₂ at this point of time, and therefore, the feed rate of the hydrocarbon-based fuel is increased to the flow rate Fk₂.

Similarly, when t₁ is 400°C or more and t₄ is 500°C or more, the feed rate of the hydrocarbon-based fuel supplied to the reformer is increased to the flow rate Fk₃, and when t₁ is 400°C or more and t₅ is 500°C or more, the feed rate of the hydrocarbon-based fuel supplied to the reformer is increased to the flow rate Fk₄.

In other words, in the above starting up method, the hydrocarbon-based fuel is supplied to the reformer, while the hydrocarbon-based fuel is increased with four divided stages. For example, in the first stage, the flow rate Fk₁ of the hydrocarbon-based fuel that can be reformed in the region Z₁, rather than the flow rate of the hydrocarbon-based fuel that can be reformed in the entire reforming catalyst layer, is used. This is for safety, and it remains that the hydrocarbon-based fuel at the flow rate Fk₁ can be reformed in the reformer.

### [Embodiment 1-2]

In this embodiment, partial oxidation reforming is performed in the first step d, and autothermal reforming is performed in the second and subsequent step d. Performing partial oxidation reforming not using water as a reforming raw material can suppress moisture included in the reformed gas condensing in the module. In this case, unlike the embodiment 1-1, the step 3 of supplying water at the flow rate F_{W1} to the water vaporizer 1 is not performed prior to the first step d. The step 1 of increasing the temperature of the water vaporizer 1 by the electrical heater 2 is not performed at the first time, and the step 1 of increasing the temperature of the water vaporizer 1 by the electrical heater 2 may be performed prior to the second step 3 of supplying water.

### [Embodiment 1-3]

In this embodiment, before the first steps c and d, combustion is performed in the reforming catalyst layer to accelerate the increase of the temperature of the reforming catalyst layer, using the catalytic combustion heat.

In this case, a temperature condition under which the hydrocarbon-based fuel can be combusted by the reforming catalyst layer is previously found. Also, a reforming catalyst layer that can promote a combustion reaction is used.

Here, the flow rate of the hydrocarbon-based fuel that is supplied to the reforming catalyst layer when the hydrocarbon-based fuel is combusted is represented as Fk₀, and the flow rate of air that is supplied to the reforming catalyst layer when the hydrocarbon-based fuel at the flow rate Fk₀ is combusted is represented as Fa₀.

Before the SOFC system is actually started up, temperatures T₁ (Fk₀) and T₂ (Fk₀) respectively measured by the temperature sensors S₁ and S₂ are previously found as a temperature condition under which the hydrocarbon-based fuel at the flow rate Fk₀ can be combusted in the region Z₁, and T₁ (Fk₀) and T₂ (Fk₀) are considered as the temperature condition of the reforming catalyst layer under which the hydrocarbon-based fuel at the flow rate Fk₀ can be combusted.

In the step 2, the following procedure is performed.

2-1. The temperature of the reforming catalyst layer is increased by the electrical heater 9. The monitoring of temperature by the thermocouples S₁ to S₅ is also started.

2-2. Air at the flow rate Fa₀ is supplied to the reforming catalyst layer 4.

2-2. By determining whether temperatures t₁ and t₂ measured by the thermocouples S₁ and S₂ are respectively T₁ (Fk₀) and T₂ (Fk₀) or higher, it is determined that the flow rate of the hydrocarbon fuel that can be combusted in the region Z₁ is the flow rate Fk₀. In other words, when the condition that t₁ is T₁ (Fk₀) or higher and t₂ is T₂ (Fk₀) or higher is satisfied, it is determined that the flow rate of the hydrocarbon fuel that can be combusted in the region Z₁ is the flow rate Fk_{0.} When the above condition is not satisfied, the flow rate of the hydrocarbon fuel that can be combusted in the region Z₁ is zero.

2-3. When the flow rate of the hydrocarbon fuel that can be combusted is determined as Fk₀, since Fk₀ exceeds the present value (zero) of the hydrocarbon-based fuel flow rate, the hydrocarbon-based fuel is supplied at feed rate Fk₀ to the reforming catalyst layer and combusted, and the obtained combustion gas is supplied to the SOFC anode.

### [Embodiment 1-4]

The i-th reforming stage can be performed, further subdivided. For example, the first reforming stage in the embodiment 1-1 can be performed, further divided into four stages, that is, the steps c and d can be repeated four times at the first reforming stage. At the first reforming stage, whether reforming is possible or not is determined considering the region Z₁. In other words, temperatures measured by the temperature sensors S₁ and S₂ are the temperature condition used for the determination. When the first reforming stage is further divided into four stages, temperature conditions, T₁ (Fk₁₋₁) and T₂ (Fk₁₋₁), under which the hydrocarbon fuel at flow rates Fk₁₋₁ to Fk₁₋₄ can be reformed in the region Z₁ at reforming stages 1-1 to 1-4 as shown in the following table, are previously found (the step a). Here, 0<Fk₁₋₁ <Fk₁-₂<Fk₁₋₃<Fk₁₋₄<Fk₂. At the reforming stage 1-1, particularly in the 1-1-th step 5 (step c), when the measured t₁ and t₂ are respectively T₁ (Fk₁₋₁) and T₂ (Fk₁₋₁) or higher, the flow rate of the hydrocarbon fuel that can be reformed in the region Z₁ is determined as Fk₁₋₁. In the 1-1-th step 6 (step d), the hydrocarbon fuel flow rate at the flow rate Fk₁₋₁ is supplied to the reforming catalyst layer. The reforming stages 1-2 to 1-4 are similarly performed, and the reforming stage proceeds to the second and subsequent reforming stages.

**Table 2**

| Reforming stage | Temperature sensors for sensing | Hydrocarbon fuel flow rate | Temperature condition |
|---|---|---|---|
| 1-1 | S₁ and S₂ | Fk₁₋₁ | T₁(Fk₁₋₁) and T₂(Fk₁₋₁) |
| 1-2 | S₁ and S₂ | Fk₁₋₂ | T₁(Fk₁₋₂) and T₂(Fk₁₋₂) |
| 1-3 | S₁ and S₂ | Fk₁₋₃ | T₁(Fk₁₋₃) and T₂(Fk₁₋₃) |
| 1-4 | S₁ and S₂ | Fk₁₋₄ | T₁(Fk₁₋₄) and T₂(Fk₁₋₄) |
| 2 | S₁ and S₃ | Fk₂ | T₁(Fk₂) and T₃(Fk₂) |
| 3 | S₁ and S₄ | Fk₃ | T₁(Fk₃) and T₄(Fk₃) |
| 4 | S₁ and S₅ | Fk₄ | T₁(Fk₃) and T₅(Fk₃) |

Here, the reforming stage 1 is further subdivided, but any reforming stage can be similarly subdivided. Also, two or more reforming stages may be similarly subdivided. When the last reforming stage is subdivided, the hydrocarbon fuel flow rate at the subdivided last stage is made to be the hydrocarbon fuel flow rate at the completion of start-up. In other words, when the fourth reforming stage in the embodiment 1-1 is further divided into four, Fk₄₋₄ is the hydrocarbon fuel flow rate at the completion of start-up.

Also for an embodiment 2 described below, further subdivision of the reforming stage may be similarly performed.

### [Embodiment 2-1]

In the embodiments described above, the temperature conditions under which the hydrocarbon-based fuel can be reformed by a part of the reforming catalyst layer on the inlet side, except for the final stage of reforming, are considered. In this embodiment, temperature conditions under which the hydrocarbon fuel can be reformed by the entire reforming catalyst layer at all stages of reforming are considered.

As the fuel cell system, one having the configuration shown in Figure 1 can be used, as in the embodiment 1-1. However, in this embodiment, the concept of the region Zᵢ is not used.

Unlike the embodiment 1-1, before the SOFC system is actually started up, temperatures T₁ (Fkᵢ) to T_{N+1} (Fkᵢ) respectively measured by the temperature sensors S₁ to S_{N+1} are previously found as a temperature condition under which the hydrocarbon-based fuel at each flow rate Fkᵢ can be reformed in the entire reforming catalyst layer, and T₁ (Fkᵢ) to T_{N+1} (Fkᵢ) are considered as the temperature condition of the reforming catalyst layer under which the hydrocarbon-based fuel at the flow rate Fkᵢ can be reformed (the step a).

Specifically, temperatures T₁ (Fk₁) to T₅ (Fk₁) respectively measured by the temperature sensors S₁ to S₅ are found as a temperature condition under which each hydrocarbon-based fuel at the flow rate Fk₁ can be reformed in the entire reforming catalyst layer. T₁ (Fk₁) and T₅ (Fk₁) are considered as the temperature condition of the reforming catalyst layer under which the hydrocarbon-based fuel at the flow rate Fk₁ can be reformed. Similarly, T₁ (Fk₂) to T₅ (Fk₂), T₁ (Fk₃) to T₅ (Fk₃), and T₁ (Fk₄) to T₅ (Fk₄) are respectively found as temperature conditions of the reforming catalyst layer under which the hydrocarbon fuel at the flow rates Fk₂ to Fk₄ can be reformed.

When the system is actually started up, in the i-th step 5, by determining whether temperatures t₁ to t₅ measured by the thermocouples S₁ to S₅ are respectively T₁ (Fkᵢ) to T₅ (Fkᵢ) or higher, it is determined that the flow rate of the hydrocarbon fuel that can be reformed in the entire reforming catalyst layer is the flow rate Fkᵢ.

This embodiment can be preferably used, regardless of the way of the increase of the temperature of each part of the catalyst layer.

Here, the way of determining the feed rate of the hydrocarbon-based fuel, based on the previously found temperature conditions, will be described giving a specific example.

For example, the temperature condition of the reforming catalyst layer under which the hydrocarbon-based fuel at the flow rate Fkᵢ can be reformed is previously found as shown in the following table.

**Table 3**

| Hydrocarbon-based fuel flow rate | Temperature condition | | | | |
|---|---|---|---|---|---|
| | T₁(Fkᵢ) | T₂(Fkᵢ) | T₃(Fkᵢ) | T₄(Fkᵢ) | T₅(Fkᵢ) |
| Fk₁ | 400°C | 500°C | 400°C | 300°C | 200°C |
| Fk₂ | 400°C | 525°C | 500°C | 400°C | 300°C |
| Fk₃ | 400°C | 550°C | 525°C | 500°C | 400°C |
| Fk₄ | 400°C | 575°C | 550°C | 525°C | 500°C |

In this case, in actually starting up the SOFC, when t₁ is 400°C or more, t₂ is 500°C or more, t₃ is 400°C or more, t₄ is 300°C or more, and t₅ is 200°C or more, it can be determined that the hydrocarbon-based fuel flow rate Fk₁ is possible in the (entire) reforming catalyst layer at this point of time, and therefore, the hydrocarbon-based fuel at the flow rate Fk₁ is supplied to the reforming catalyst layer.

Next, when t₁ is 400°C or more, t₂ is 525°C or more, t₃ is 500°C or more, t₄ is 400°C or more, and t₅ is 300°C or more, it can be determined that the hydrocarbon-based fuel flow rate Fk₂ is possible in the (entire) reforming catalyst layer at this point of time, and therefore, the feed rate of the hydrocarbon-based fuel is increased to the flow rate Fk₂.

Similarly, when t₁ is 400°C or more, t₂ is 550°C or more, t₃ is 520°C or more, t₄ is 500°C or more, and t₅ is 400°C or more, the feed rate of the hydrocarbon-based fuel supplied to the reforming catalyst layer is increased to the flow rate Fk₃.

When t₁ is 400°C or more, t₂ is 575°C or more, t₃ is 550°C or more, t₄ is 525°C or more, and t₅ is 500°C or more, the feed rate of the hydrocarbon-based fuel supplied to the reforming catalyst layer is increased to the flow rate Fk₄.

### [Embodiment 2-2]

In the embodiment 2-1, determination is performed using all of T₁ to T₅ at all reforming stages. But, this is not limiting, and it is also possible to perform determination using at least one temperature, preferably two or more temperatures, of T₁ to T₅ at each reforming stage. Also, it is not necessary to perform determination using the same temperature(s) of T₁ to T₅ at each stage.

For example, as shown in the following table, for the first reforming stage, temperatures T₁ and T₂ measured by the temperature sensors S₁ and S₂ are the temperature condition. In actual start-up, when temperatures t₁ and t₂ measured by the temperature sensors S₁ and S₂ that measure T₁ and T₂ are respectively equal to or higher than T₁ and T₂ measured by the same temperature sensors (S₁ and S₂), the hydrocarbon-based fuel at a flow rate Fk₁ may be supplied to the reforming catalyst layer.

For the second reforming stage, temperatures T₂, T₃, and T₄ measured by the temperature sensors S₂, S₃, and S₄ are the temperature condition. In actual start-up, when temperatures t₂, t₃, and t₄ measured by the temperature sensors S₂, S₃, and S₄ are respectively equal to or higher than T₂, T₃, and T₄ measured by the same temperature sensors (S₂, S₃, and S₄), the hydrocarbon-based fuel at a flow rate Fk₂ may be supplied to the reforming catalyst layer.

**Table 4**

| Reforming stage | Temperature sensors for sensing | Hydrocarbon fuel flow rate |
|---|---|---|
| 1 | S₁, S₂ | Fk₁ |
| 2 | S₂, S₃, S₄ | Fk₂ |
| 3 | S₁, S₃, S₅ | Fk₃ |
| 4 | S₃, S₄, S₅ | Fk₄ |

### [Fuel Cell System]

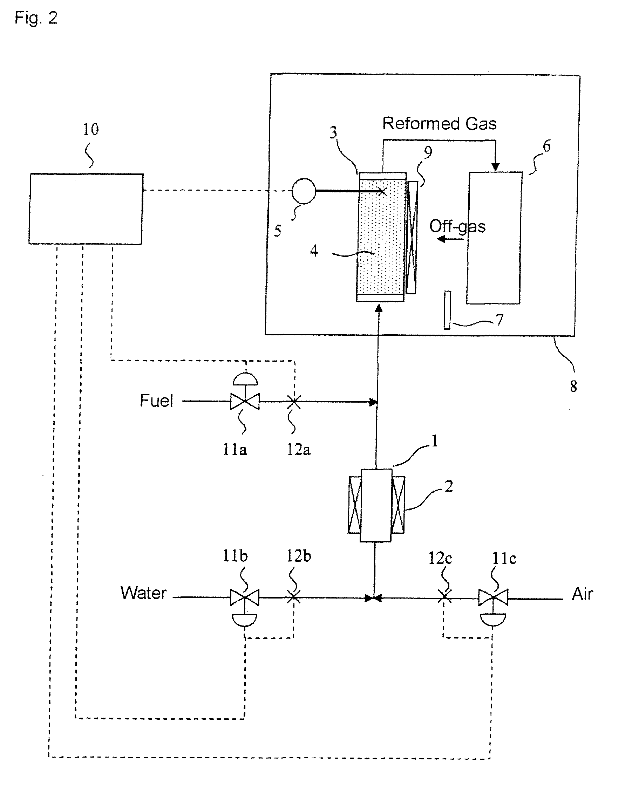

One embodiment of a fuel cell system that can be preferably used to perform the above method will be described using Figure 2.

This fuel cell system includes:
a reformer 3 having a reforming catalyst layer 4, for reforming a hydrocarbon-based fuel to produce a hydrogen-containing gas;
a high temperature fuel cell for generating electric power using the hydrogen-containing gas (SOFC 6);
a reforming catalyst layer temperature measuring means for measuring a temperature of the reforming catalyst layer (thermocouple 5);
a reforming catalyst layer temperature increasing means for increasing a temperature of the reforming catalyst layer (electrical heater 9); and
a flow rate controlling means for controlling the feed rate of a reforming aid gas, which is at least one selected from the group consisting of steam and an oxygen-containing gas, to the reforming catalyst layer, and controlling the feed rate of the hydrocarbon-based fuel to the reforming catalyst layer.

The flow rate controlling means may include, for example, a computer 10, a flowmeter, and a flow rate control valve.

A flowmeter 12a and a flow rate control valve 11a for the hydrocarbon-based fuel may be used to control the feed rate of the hydrocarbon-based fuel to the reforming catalyst layer.

Regarding the control of the feed rate of the reforming aid gas to the reforming catalyst layer, a flowmeter 12b and a flow rate control valve 11 b for water can be used for the control of the flow rate of the steam, and a flowmeter 11 c and a flow rate control valve 11 c for air can be used for the control of the flow rate of the oxygen-containing gas. For the control of the flow rate of the hydrocarbon-based fuel and the reforming aid gas, the flow rate may be controlled, with these in the state of gas, and in some cases, the flow rate may be controlled, with these in the state of liquid before vaporization.

A first temperature condition that is a temperature condition of the reforming catalyst layer under which the hydrocarbon-based fuel at a flow rate lower than a hydrocarbon-based fuel flow rate at the completion of start-up can be reformed, a second temperature condition that is a temperature condition of the reforming catalyst layer under which the hydrocarbon-based fuel at the flow rate at the completion of start-up can be reformed, and the feed rate of the hydrocarbon-based fuel to the reforming catalyst layer at the completion of start-up are previously input to the flow rate controlling means.

Also, the flow rate controlling means repeatedly operates the following fuel flow rate determining function and fuel flow rate setting function in this order until the feed rate of the hydrocarbon-based fuel to the reforming catalyst layer becomes the flow rate at the completion of start-up.

The fuel flow rate determining function is a function of comparing the measured temperature of the reforming catalyst layer with at least one of the first and second temperature conditions and determining the flow rate of the hydrocarbon-based fuel that can be reformed in the reforming catalyst layer at a point of time when this measurement is performed.

The fuel flow rate setting function is a function of setting the flow rate of the hydrocarbon-based fuel supplied to the reforming catalyst layer to the flow rate determined by the fuel flow rate determining function when this determined flow rate exceeds the present value of the flow rate of the hydrocarbon-based fuel supplied to the reforming catalyst layer,
The flow rate controlling means preferably has a function of calculating a reforming aid gas flow rate required for reforming the hydrocarbon-based fuel at a flow rate set by the fuel flow rate setting function, and setting the flow rate of the reforming aid gas supplied to the reforming catalyst layer to this calculated flow rate before setting a flow rate in the fuel flow rate setting function.

It is preferred that the flow rate controlling means can control the feed rate of the reforming aid gas to the reforming catalyst layer so as to perform steam reforming in reforming the hydrocarbon-based fuel at the flow rate at the completion of start-up. In this case, a reforming catalyst layer that can promote a steam reforming reaction is used, and at least steam is used as the reforming aid gas. An oxygen-containing gas may be used as the reforming aid gas, but when steam reforming is performed, the oxygen-containing gas is not supplied to the reforming catalyst layer.

In this case, further, it is preferred that the flow rate controlling means can control the feed rate of the reforming aid gas to the reforming catalyst layer so as to perform partial oxidation reforming or autothermal reforming in reforming the hydrocarbon-based fuel at a flow rate lower than the flow rate at the completion of start-up. In order to do this, the reforming catalyst layer can promote a steam reforming reaction and a partial oxidation reforming reaction, and the reforming aid gas includes an oxygen-containing gas.

The flow rate controlling means may be able to control the feed rate of the reforming aid gas and the hydrocarbon-based fuel to the reforming catalyst layer so as to perform combustion. In this case, the reforming catalyst layer can promote combustion, and the reforming aid gas includes at least an oxygen-containing gas. In this case, combustion can be performed in the reforming catalyst layer, and therefore, the reforming catalyst layer and the flow rate controlling means may constitute the reforming catalyst layer temperature increasing means. The reforming catalyst layer temperature increasing means configured in this manner, and an electrical heater as another reforming catalyst layer temperature increasing means may be used in combination.

### [Hydrocarbon-based Fuel]

It is possible to use a hydrocarbon-based fuel appropriately selected from compounds of which molecules contain carbon and hydrogen (may also contain other elements, such as oxygen) or mixtures thereof that are publicly known as raw materials of the reformed gas in the field of SOFCs. It is possible to use compounds of which molecules contain carbon and hydrogen, such as hydrocarbons and alcohols. For example, hydrocarbon fuels, such as methane, ethane, propane, butane, natural gas, LPG (liquefied petroleum gas), city gas, gasoline, naphtha, kerosene, and gas oil, alcohols, such as methanol and ethanol, ethers, such as dimethylether, and the like may be used.

Particularly, kerosene and LPG are preferred because they are readily available. In addition, they can be stored in a stand-alone manner, and therefore, they are useful in areas where the city gas pipeline is not built. Further, an SOFC power generating equipment using kerosene or LPG is useful as an emergency power supply. Particularly, kerosene is preferred because it is easy to handle.

### [High Temperature Fuel Cell]

The present invention may be suitably applied to a system equipped with a high temperature fuel cell that requires the prevention of the oxidative degradation of the anode. When a metal electrode is used for the anode, the oxidative degradation of the anode may occur, for example, at about 400°C. Such a fuel cell includes an SOFC and an MCFC.

The SOFC may be appropriately selected for use from publicly known SOFCs having various shapes, such as planar and tubular SOFCs. In the SOFC, generally, an oxygen-ion conductive ceramic or a proton-ion conductive ceramic is used as the electrolyte.

The MCFC may also be appropriately selected for use from publicly known MCFCs.

The SOFC or the MCFC may be a single cell, but practically, a stack in which a plurality of single cells are arrayed (the stack is sometimes referred to as a bundle in the case of a tubular type, and the stack in this specification includes a bundle) is preferably used. In this case, one stack or a plurality of stacks may be used.

### [Reformer]

The reformer produces a reformed gas containing hydrogen from a hydrocarbon-based fuel. In the reformer, any of steam reforming, partial oxidation reforming and autothermal reforming in which a steam reforming reaction is accompanied by a partial oxidation reaction may be performed.

In the reformer, a steam reforming catalyst having steam reforming activity, a partial oxidation reforming catalyst having partial oxidation reforming activity, or an autothermal reforming catalyst having both partial oxidation reforming activity and steam reforming activity may be appropriately used.

A hydrocarbon-based fuel (vaporized beforehand as required) and steam, and further an oxygen-containing gas, such as air, as required, may be supplied to the reformer (the reforming catalyst layer), each independently, or appropriately mixed beforehand. The reformed gas is supplied to the anode of the high temperature fuel cell.

Among high temperature fuel cells, an indirect internal reforming SOFC is excellent in that the thermal efficiency of the system can be increased. The indirect internal reforming SOFC has a reformer for producing a reformed gas containing hydrogen from a hydrocarbon-based fuel using a steam reforming reaction and an SOFC. In this reformer, a steam reforming reaction may be performed, and autothermal reforming in which a steam reforming reaction is accompanied by a partial oxidation reaction may be performed. In terms of the electric power generation efficiency of the SOFC, preferably, no partial oxidation reaction occurs after the completion of start-up. The autothermal reforming is designed so that steam reforming is predominant after the completion of start-up, and therefore, the reforming reaction is an overall endothermic reaction. Heat required for the reforming reaction is supplied from the SOFC. The reformer and the SOFC are housed in one module container and modularized. The reformer is disposed at a position where it receives thermal radiation from the SOFC. Thus, the reformer is heated by thermal radiation from the SOFC during electric power generation. Also, the SOFC may be heated by combusting the anode off-gas, which is discharged from the SOFC, at the cell outlet.

In the indirect internal reforming SOFC, the reformer is preferably disposed at a position where radiation heat can be directly transferred from the SOFC to the outer surface of the reformer. Therefore, it is preferred that there is substantially no obstacle between the reformer and the SOFC, that is, it is preferred to make the region between the reformer and the SOFC be an empty space. Also, the distance between the reformer and the SOFC is preferably as short as possible.

Each supply gas is supplied to the reformer or the SOFC, after being appropriately preheated as required.

The module container may be any appropriate container capable of housing the SOFC and the reformer. An appropriate material having resistance to the environment used, for example, stainless steel, may be used as the material of the container. A connection port is appropriately provided for the container for gas interfacing or the like.

Particularly when the cell outlet opens in the module container, the module container is preferably hermetic in order to prevent communication between the interior of the module container and the surroundings (atmosphere).

### [Reforming Catalyst]

A publicly known catalyst may be used for each of the steam reforming catalyst, the partial oxidation reforming catalyst and the autothermal reforming catalyst used in the reformer. Examples of the partial oxidation reforming catalyst include a platinum-based catalyst. Examples of the steam reforming catalyst include ruthenium-based and nickel-based catalysts. Examples of the autothermal reforming catalyst include a rhodium-based catalyst. Examples of the reforming catalyst that can promote combustion include platinum-based and rhodium-based catalysts.

The temperature at which the partial oxidation reforming reaction can proceed is, for example, 200°C or more. The temperature at which the steam reforming reaction can proceed is, for example, 400°C or more.

The conditions at start-up and during rated operation of the reformer for each of steam reforming, autothermal reforming, and partial oxidation reforming will be described below.

In steam reforming, steam is added to a reforming raw material, such as kerosene. The reaction temperature of the steam reforming may be in the range of, for example, 400°C to 1000°C, preferably 500°C to 850°C, and further preferably 550°C to 800°C. The amount of the steam introduced into the reaction system is defined as the ratio of the number of moles of water molecules to the number of moles of carbon atoms contained in the hydrocarbon-based fuel (steam/carbon ratio). This value is preferably 1 to 10, more preferably 1.5 to 7, and further preferably 2 to 5. When the hydrocarbon-based fuel is liquid, the space velocity (LHSV) can be represented as A/B, wherein the flow velocity of the hydrocarbon-based fuel in a liquid state is represented as A (L/h), and the volume of the catalyst layer is represented as B (L). This value is set in the range of preferably 0.05 to 20 h⁻¹, more preferably 0.1 to 10 h⁻¹, and further preferably 0.2 to 5 h⁻¹.

In autothermal reforming, in addition to the steam, an oxygen-containing gas is added to the reforming raw material. The oxygen-containing gas may be pure oxygen, but in terms of the ease of availability, air is preferred. The oxygen-containing gas may be added so that the endothermic reaction accompanying the steam reforming reaction is balanced, and an amount of heat generation such that the temperature of the reforming catalyst layer and the SOFC can be maintained or increased is obtained. For the amount of the oxygen-containing gas added, the ratio of the number of moles of oxygen molecules to the number of moles of carbon atoms contained in the hydrocarbon-based fuel (oxygen/carbon ratio) is preferably 0.005 to 1, more preferably 0.01 to 0.75, and further preferably 0.02 to 0.6. The reaction temperature of the autothermal reforming reaction is set in the range of, for example, 400°C to 1000°C, preferably 450°C to 850°C, and further preferably 500°C to 800°C. When the hydrocarbon-based fuel is liquid, the space velocity (LHSV) is selected in the range of preferably 0.05 to 20 h⁻¹, more preferably 0.1 to 10 h⁻¹, and further preferably 0.2 to 5 h⁻¹. For the amount of the steam introduced into the reaction system, the steam/carbon ratio is preferably 1 to 10, more preferably 1.5 to 7, and further preferably 2 to 5.

In partial oxidation reforming, an oxygen-containing gas is added to the reforming raw material. The oxygen-containing gas may be pure oxygen, but in terms of the ease of availability, air is preferred. The amount of the oxygen-containing gas added is appropriately determined in terms of heat loss and the like to ensure a temperature at which the reaction proceeds. For this amount, the ratio of the number of moles of oxygen molecules to the number of moles of carbon atoms contained in the hydrocarbon-based fuel (oxygen/carbon ratio) is preferably 0.1 to 3 and more preferably 0.2 to 0.7. The reaction temperature of the partial oxidation reaction may be set in the range of, for example, 450°C to 1000°C, preferably 500°C to 850°C, and further preferably 550°C to 800°C. When the hydrocarbon-based fuel is liquid, the space velocity (LHSV) is selected in the range of preferably 0.1 to 30 h⁻¹. Steam can be introduced into the reaction system to suppress the generation of soot, and for the amount of the steam, the steam/carbon ratio is preferably 0.1 to 5, more preferably 0.1 to 3, and further preferably 1 to 2.

### [Other Equipment]

In the fuel cell system used in the present invention, publicly known components of a high temperature fuel cell system may be appropriately provided as required. Specific examples of the publicly known components include a desulfurizer for reducing a sulfur content of a hydrocarbon-based fuel; a vaporizer for vaporizing a liquid; pressure increasing means for pressurizing various fluids, such as a pump, a compressor, and a blower; flow rate controlling means or flow path blocking/switching means for controlling the flow rate of a fluid, or blocking/switching the flow of a fluid, such as a valve; a heat exchanger for performing heat exchange and heat recovery; a condenser for condensing a gas; heating/warming means for externally heating various equipment with steam or the like; storage means of a hydrocarbon-based fuel and combustibles; an air or electrical system for instrumentation; a signal system for control; a control device; and an electrical system for output and powering; and the like.

### Industrial Applicability

The present invention can be applied to a high temperature fuel cell system used for, for example, a stationary or mobile electric power generation system and a cogeneration system.

## Claims

1. A method for starting up a fuel cell system comprising a reformer having a reforming catalyst layer, for reforming a hydrocarbon-based fuel to produce a hydrogen-containing gas, and a high temperature fuel cell for generating electric power using the hydrogen-containing gas, comprising:
a) previously finding a first temperature condition that is a temperature condition of the reforming catalyst layer under which the hydrocarbon-based fuel at a flow rate lower than a hydrocarbon-based fuel flow rate at completion of start-up can be reformed, and
a second temperature condition that is a temperature condition of the reforming catalyst layer under which the hydrocarbon-based fuel at the flow rate at the completion of start-up can be reformed;
b) increasing a temperature of the reforming catalyst layer, while measuring the temperature of the reforming catalyst layer;
c) comparing the measured temperature of the reforming catalyst layer with at least one of the first and second temperature conditions to determine a flow rate of the hydrocarbon-based fuel that can be reformed in the reforming catalyst layer at a point of time when the measurement is performed; and
d) when the determined flow rate exceeds the present value of a hydrocarbon-based fuel flow rate, supplying the hydrocarbon-based fuel at the determined flow rate to the reforming catalyst layer to reform the hydrocarbon-based fuel, and supplying the obtained reformed gas to an anode of the high temperature fuel cell,
wherein steps c and d are repeated until the feed rate of the hydrocarbon-based fuel to the reforming catalyst layer becomes the flow rate at the completion of start-up.

2. The method according to claim 1, further comprising
e) supplying steam and/or an oxygen-containing gas at a flow rate required for the reforming performed in step d to the reforming catalyst layer prior to step d.

3. The method according to claim 1 or 2,
wherein as the reforming catalyst layer, a reforming catalyst layer that can promote a steam reforming reaction is used, and
steam reforming is performed when the hydrocarbon-based fuel at the flow rate at the completion of start-up is reformed.

4. The method according to claim 3,
wherein as the reforming catalyst layer, a reforming catalyst layer that can promote a steam reforming reaction and a partial oxidation reforming reaction is used, and
partial oxidation reforming or autothermal reforming is performed when the hydrocarbon-based fuel at a flow rate lower than the flow rate at the completion of start-up is reformed.

5. The method according to any one of claims 1 to 4,
wherein as the reforming catalyst layer, a reforming catalyst layer that can promote combustion is used, and
in step b, the hydrocarbon-based fuel is supplied to the reforming catalyst layer to perform combustion.

6. The method according to any one of claims 1 to 5,
wherein temperature sensors are disposed at an inlet end and outlet end of the reforming catalyst layer and between the inlet end and the outlet end, provided that the temperature sensors are disposed at different positions along a gas flow direction, and
when the number of the temperature sensors is represented as N+1, N being an integer of 2 or more,
the i-th temperature sensor from an inlet end side of the reforming catalyst layer is represented as Sᵢ, i being an integer of 1 or more and N or less, and the temperature sensor provided at the outlet end of the reforming catalyst layer is represented as S_{N+1},
a region of the reforming catalyst layer positioned between the temperature sensor S₁ and the temperature sensor Sᵢ₊₁ is represented as Zᵢ, and
different N hydrocarbon-based fuel flow rates are represented as Fkᵢ, provided that Fk₁ has a positive value, Fkᵢ increases with an increase of i, and Fk_{N} is the hydrocarbon-based fuel flow rate at the completion of start-up,
in step a, temperatures T₁ (Fkᵢ) and Tᵢ₊₁ (Fkᵢ) respectively measured by the temperature sensors S₁ and Sᵢ₊₁ are found as a temperature condition under which the hydrocarbon-based fuel at each flow rate Fkᵢ can be reformed in the region Zᵢ, and the T₁ (Fkᵢ) and Tᵢ₊₁ (Fkᵢ) are considered as a temperature condition of the reforming catalyst layer under which the hydrocarbon-based fuel at the flow rate Fkᵢ can be reformed,
steps c and d are repeatedly performed N times, and
in an i-th step c, when temperatures t₁ and tᵢ₊₁ respectively measured by the temperature sensors S₁ and Sᵢ₊₁ become respectively the temperatures T₁ (Fkᵢ) and Tᵢ₊₁ (Fkᵢ) or higher, the flow rate of the hydrocarbon fuel that can be reformed in the region Zᵢ is determined as Fkᵢ.

7. The method according to any one of claims 1 to 5,
wherein temperature sensors are disposed at an inlet end and outlet end of the reforming catalyst layer and between the inlet end and the outlet end, provided that the temperature sensors are disposed at different positions along a gas flow direction, and
when the number of the temperature sensors is represented as N+1, N being an integer of 2 or more,
the i-th temperature sensor from an inlet end side of the reforming catalyst layer is represented as Sᵢ, i being an integer of 1 or more and N or less, and the temperature sensor provided at the outlet end of the reforming catalyst layer is represented as S_{N+1}, and
different N hydrocarbon-based fuel flow rates are represented as Fkᵢ, provided that Fk₁ has a positive value, Fkᵢ increases with an increase of i, and Fk_{N} is the hydrocarbon-based fuel flow rate at the completion of start-up,
in step a, at least one temperature of temperatures T₁ (Fkᵢ) to T_{N+1} (Fkᵢ) respectively measured by the temperature sensors S₁ to S_{N+1} are found as a temperature condition under which the hydrocarbon-based fuel at each flow rate Fkᵢ can be reformed in the entire reforming catalyst layer, and the at least one temperature of T₁ (Fkᵢ) to T_{N+1} (Fkᵢ) is considered as a temperature condition of the reforming catalyst layer under which the hydrocarbon-based fuel at the flow rate Fkᵢ can be reformed,
steps c and d are repeatedly performed N times, and
in an i-th step c, when a temperature measured by the temperature sensor S₁ to S_{N+1} that measure the at least one temperature of T₁ (Fkᵢ) to T_{N+1} (Fkᵢ) in step a becomes equal to or higher than the at least one temperature of T₁ (Fkᵢ) to T_{N+i} (Fkᵢ) measured by the same temperature sensor, the flow rate of the hydrocarbon fuel that can be reformed is determined as Fkᵢ.

8. A fuel cell system comprising:
a reformer having a reforming catalyst layer, for reforming a hydrocarbon-based fuel to produce a hydrogen-containing gas;
a high temperature fuel cell for generating electric power using the hydrogen-containing gas;
a reforming catalyst layer temperature measuring means for measuring a temperature of the reforming catalyst layer;
a reforming catalyst layer temperature increasing means for increasing a temperature of the reforming catalyst layer; and
a flow rate controlling means for controlling the feed rates of a reforming aid gas and the hydrocarbon-based fuel to the reforming catalyst layer, the reforming aid gas being at least one selected from the group consisting of steam and an oxygen-containing gas,
wherein a first temperature condition that is a temperature condition of the reforming catalyst layer under which the hydrocarbon-based fuel at a flow rate lower than a hydrocarbon-based fuel flow rate at completion of start-up can be reformed, a second temperature condition that is a temperature condition of the reforming catalyst layer under which the hydrocarbon-based fuel at the flow rate at the completion of start-up can be reformed, and the feed rate of the hydrocarbon-based fuel to the reforming catalyst layer at the completion of start-up are able to be input into the flow rate controlling means,
the flow rate controlling means is able to repeatedly operate the following fuel flow rate determining function and fuel flow rate setting function in this order until the feed rate of the hydrocarbon-based fuel to the reforming catalyst layer becomes the flow rate at the completion of start-up,
the fuel flow rate determining function is a function of comparing the measured temperature of the reforming catalyst layer with at least one of the first and second temperature conditions to determine the flow rate of the hydrocarbon-based fuel that can be reformed in the reforming catalyst layer at a point of time when the measurement is performed, and
the fuel flow rate setting function is a function of setting the flow rate of the hydrocarbon-based fuel supplied to the reforming catalyst layer to the determined flow rate when the determined flow rate exceeds the present value of the flow rate of the hydrocarbon-based fuel supplied to the reforming catalyst layer.

9. The fuel cell system according to claim 8,
wherein the flow rate controlling means has a function of calculating a reforming aid gas flow rate required for reforming the hydrocarbon-based fuel at a flow rate set by the fuel flow rate setting function, and setting the flow rate of the reforming aid gas supplied to the reforming catalyst layer to the calculated flow rate before setting a flow rate in the fuel flow rate setting function.

10. The fuel cell system according to claim 8 or 9,
wherein the reforming catalyst layer can promote a steam reforming reaction,
the reforming aid gas comprises steam, and
the flow rate controlling means can control the feed rate of the reforming aid gas to the reforming catalyst layer so as to perform steam reforming when reforming the hydrocarbon-based fuel at the flow rate at the completion of start-up.

11. The fuel cell system according to claim 10,
wherein the reforming catalyst layer can promote a steam reforming reaction and a partial oxidation reforming reaction,
the reforming aid gas comprises an oxygen-containing gas, and
the flow rate controlling means can control the feed rate of the reforming aid gas to the reforming catalyst layer so as to perform partial oxidation reforming or autothermal reforming when reforming the hydrocarbon-based fuel at a flow rate lower than the flow rate at the completion of start-up.

12. The fuel cell system according to claim any one of claims 8 to 11,
wherein the reforming catalyst layer can promote combustion,
the reforming aid gas comprises at least an oxygen-containing gas,
the flow rate controlling means can control the feed rates of the reforming aid gas and the hydrocarbon-based fuel to the reforming catalyst layer so as to perform combustion, and
the reforming catalyst layer and the flow rate controlling means constitute the reforming catalyst layer temperature increasing means.
